(19) Europäisches Patentamt
European Patent Office
Office européen des brevets

(11) **EP 2 562 295 A1**

(12) **EUROPEAN PATENT APPLICATION**
published in accordance with Art. 153(4) EPC

(43) Date of publication:
27.02.2013 Bulletin 2013/09

(51) Int Cl.:
*C25D 5/56* (2006.01)     *C22C 21/00* (2006.01)
*C25D 1/08* (2006.01)     *C25D 3/66* (2006.01)
*C25D 7/00* (2006.01)     *H01M 4/66* (2006.01)
*H01M 4/80* (2006.01)

(21) Application number: 11771874.2

(22) Date of filing: 07.04.2011

(86) International application number:
PCT/JP2011/058781

(87) International publication number:
WO 2011/132538 (27.10.2011 Gazette 2011/43)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 17.12.2010 JP 2010281216
28.05.2010 JP 2010122367
22.04.2010 JP 2010098334

(71) Applicant: Sumitomo Electric Industries, Ltd.
Osaka-shi, Osaka 541-0041 (JP)

(72) Inventors:
• GOTO, Kengo
Osaka-shi
Osaka 554-0024 (JP)
• HOSOE, Akihisa
Osaka-shi
Osaka 554-0024 (JP)
• MAJIMA, Masatoshi
Osaka-shi
Osaka 554-0024 (JP)
• OKUNO, Kazuki
Itami-shi
Hyogo 664-0016 (JP)

• NITTA, Koji
Osaka-shi
Osaka 554-0024 (JP)
• OTA, Hajime
Osaka-shi
Osaka 554-0024 (JP)
• SAKAI, Shoichiro
Osaka-shi
Osaka 554-0024 (JP)
• INAZAWA, Shinji
Osaka-shi
Osaka 554-0024 (JP)
• KIMURA, Kotaro
Osaka-shi
Osaka 554-0024 (JP)
• AWAZU, Tomoyuki
Itami-shi
Hyogo 664-0016 (JP)

(74) Representative: Setna, Rohan P.
Boult Wade Tennant
Verulam Gardens
70 Gray's Inn Road
London WC1X 8BT (GB)

(54) **METHOD FOR PRODUCING ALUMINUM STRUCTURE AND ALUMINUM STRUCTURE**

(57) A porous resin article having a three-dimensional network structure is used. A resin molded body at least the surface of which has been subjected to conductive treatment is plated with aluminum in a molten salt bath to form an aluminum structural body, thus forming a porous aluminum that includes an aluminum layer having a thickness in the range of 1 to 100 μm, has an aluminum purity of 98.0% or more and a carbon content of 1.0% or more and 2% or less, and contains inevitable impurities as the balance. Even with a porous resin molded body having a three-dimensional network structure, this allows the surface of the porous resin molded body to be plated with aluminum, thus forming a high-purity aluminum structural body having a uniform thick film.

FIG. 2

**Description**

Technical Field

The present invention relates to a method for forming an aluminum structural body on a resin surface by aluminum plating and, more particularly, to an aluminum structural body that can be suitably used as a porous metal body in applications, such as various filters and battery electrodes, and a method for producing the aluminum structural body.

Background Art

Porous metal bodies having a three-dimensional network structure have been used in a wide range of applications, such as various filters, catalyst supports, and battery electrodes. For example, Celmet (manufactured by Sumitomo Electric Industries, Ltd., registered trademark) made of nickel has been used as an electrode material for batteries, such as nickel-hydrogen batteries and nickel-cadmium batteries. Celmet is a porous metal body having continuous pores and characteristically has a higher porosity (90% or more) than other porous bodies, such as metal non-woven fabrics. Celmet can be manufactured by forming a nickel layer on a surface of the skeleton of a porous resin having continuous pores, such as urethane foam, decomposing the resin expansion molded body by heat treatment, and reducing the nickel. The nickel layer can be formed by performing a conductive treatment of applying a carbon powder to the surface of the skeleton of the resin expansion molded body and then depositing nickel by electrodeposition.

Aluminum has excellent characteristics, such as conductive property, corrosion resistance property, and lightweight. For use in batteries, for example, aluminum foil to which an active material, such as lithium cobalt oxide, is applied has been used as a positive electrode of lithium-ion batteries. In order to increase the capacity of a positive electrode, an aluminum body can be processed into a porous body having a large surface area, and the inside of the aluminum body can be filled with an active material. This allows the active material to be utilized even in an electrode having a large thickness and improves the active material availability ratio per unit area.

As a method for producing porous aluminum, Patent Literature 1 describes a method for subjecting a plastic substrate having an inner continuous space and a three-dimensional network to an aluminum vapor deposition process by an arc ion plating method to form a metallic aluminum layer having a thickness in the range of 2 to 20 $\mu$m. Patent Literature 2 describes a method for forming a porous metal body, including forming a film made of a metal (such as copper) on the skeleton of a resin expansion molded body having a three-dimensional network structure, the metal having an ability to form an eutectic alloy at a temperature of the melting point of aluminum or less, applying an aluminum paste to the film, and performing heat treatment in a non-oxidizing atmosphere at a temperature of 550°C or more and 750°C or less to evaporate the organic constituent (resin foam) and sinter the aluminum powder.

Since aluminum has high chemical affinity to oxygen and a lower electric potential than hydrogen, the electrodeposition in a plating bath containing an aqueous solution is difficult to perform in aluminum plating. Thus, aluminum electrodeposition has been studied in a plating bath containing a non-aqueous solution. For example, as a technique for plating a metal surface with aluminum for the purpose of antioxidation of the metal surface, Patent Literature 3 discloses an aluminum electrodeposition method characterized in that a low melting composition, which is a blend melt of an onium halide and an aluminum halogenide, is used in a plating bath, and aluminum is deposited on a cathode while the water content of the plating bath is maintained at 2% by weight or less.

Citation List

Patent Literature

PTL 1: Japanese Patent No. 3413662
PTL 2: Japanese Unexamined Patent Application Publication No. 8-170126
PTL 3: Japanese Patent No. 3202072

Summary of Invention

Technical Problem

In accordance with the method described in Patent Literature 1, porous aluminum having a thickness in the range of 2 to 20 $\mu$m can be manufactured. However, it is difficult to produce a large area by the gas phase method and, depending on the thickness or porosity of a substrate, it is difficult to form a layer having a uniform interior. There are additional problems of a low rate of formation of the aluminum layer and high manufacturing costs because of expensive installation. Furthermore, the formation of a thick film may cause cracking in the film or falling of aluminum. In accordance with the method described in Patent Literature 2, unfortunately, a layer that forms an eutectic alloy with aluminum is formed instead of a high-purity aluminum layer. Although an aluminum electrodeposition method is known, plating of only a metal surface is possible, and there is no known method for electrodeposition on a resin molded body surface, in particular electrodeposition on the surface of a porous resin molded body having a three-dimensional network structure. This is probably influenced by the dissolution of a porous resin in a plating bath and other problems.

Accordingly, it is an object of the present invention to provide a method for forming a high-purity aluminum structural body, including performing aluminum plating on the surface of a resin molded body, in particular even a porous resin molded body having a three-dimensional network structure, to form a uniform thick film, and a method for producing porous aluminum having a large area.

Solution to Problem

In order to solve the problems described above, the present inventors have arrived at a method for aluminum electrodeposition of a surface of a resin molded body made of polyurethane, melamine, or the like. The present invention provides a method for producing an aluminum structural body, including a process of plating a resin molded body with aluminum in a molten salt bath, at least the surface of the resin molded body having been subjected to conductive treatment (the first invention of the present application).

As described above, although aluminum plating has been performed on metal surfaces, electrodeposition of resin molded body surfaces has not been considered. The present invention is characterized in that making a resin molded body surface be electrically conductive (conductive treatment) was found to make it possible to perform aluminum plating in a molten salt bath.

A uniform thick aluminum layer can be formed on a surface of a complicated skeleton structural body, in particular a porous resin article having a three-dimensional network structure (the second invention of the present application).

The molten salt bath is preferably a bath of a molten salt containing nitrogen, particularly preferably an electroplating bath which comprises an imidazolium salt (the third invention of the present application).

In the case where a salt that can melt at a high temperature is used as the molten salt, the dissolution or decomposition of a resin in the molten salt is faster than the growth of a plated layer. Thus, a plated layer cannot be formed on the resin molded body surface. An electroplating bath which comprises an imidazolium salt can be used without having an influence on the resin even at relatively low temperatures. The imidazolium salt is preferably a salt that contains an imidazolium cation having alkyl groups at 1,3-position. In particular, aluminum chloride-1-ethyl-3-methylimidazolium chloride ($AlCl_3$-EMIC) molten salts are most preferred because of their high stability and resistance to decomposition. An electroplating bath which comprises an imidazolium salt allows plating of urethane foam resins and melamine foam resins. The temperature of the molten salt bath ranges from 10°C to 60°C, preferably 25°C to 45°C. With a decrease in temperature, the current density range for plating is narrowed, and plating of the entire surface of a porous body becomes more difficult. A high temperature of 60°C or more often results in a defective shape of the base resin. The electroplating bath which comprises an imidazolium salt dislikes the presence of water and oxygen. Thus, plating is preferably performed in an atmosphere of an inert gas, such as argon or nitrogen, in a closed environment.

In the case that the electroplating bath which comprises an imidazolium salt is used as the molten salt bath, an organic solvent is preferably added to the molten salt bath (the fourth invention of present application). The organic solvent is particularly preferably xylene (the sixth invention of the present application).

With respect to molten salt aluminum plating on a metal surface, it is reported that an additive agent, such as xylene, benzene, toluene, or 1,10-phenanthroline, is added to $AlCl_3$-EMIC so as to improve the smoothness of the plated surface. The present inventors found that in aluminum plating of a porous resin article particularly having a three-dimensional network structure the addition of an organic solvent, particularly xylene, has particular effects on the formation of porous aluminum. More specifically, the skeleton structure of aluminum forming the porous body is tough (a first characteristic), and uniform plating can be achieved with a small difference in plating thickness between the surface and the interior of the porous body (a second characteristic). The first characteristic results from the fact that the addition of an organic solvent can change the plating state on the surface of the skeleton from granular (a granular appearance in surface observation because of great irregularities) to flat, thereby strengthening even a thin and narrow skeleton. The second characteristic results from the fact that the addition of an organic solvent to the molten salt bath decreases the viscosity of the molten salt bath and accordingly facilitates the flow of the plating bath into the fine network structure. At a high viscosity, a fresh plating bath is easily fed to the porous body surface but is rarely fed into the interior. A decrease in viscosity facilitates the feeding of the plating bath into the interior, allowing plating in a uniform thickness.

In the pressing of manufactured porous aluminum, these two characteristics of toughness and the uniform plating thickness in the interior and exterior can provide a porous body that generally has a tough skeleton and is uniformly pressed. When porous aluminum is used as an electrode material for batteries, an electrode filled with an electrode active material is pressed to increase its density, and the skeleton is often broken in the filling process of the active material or pressing. Thus, the two characteristics are very important in such an application.

In order to achieve these characteristics, the amount of organic solvent added to the plating bath preferably ranges from 25% to 57% by mole (the sixth invention of the present application). At 25% by mole or less, it is difficult to achieve an effect of decreasing a difference in thickness between the surface layer and the interior. At 57% by mole or more, the plating bath becomes unstable, and the plating liquid and xylene are partially separated.

The xylene may be any of xylene isomers or a mixture thereof. When m-xylene is used among the xylene isomers, the addition of 35% to 57% m-xylene can provide a particularly smooth surface (the seventh invention of the present application).

The plating process in a molten salt bath to which the organic solvent is added is preferably followed by a washing process using the organic solvent as a cleaning liquid (the eighth invention of the present application).

A plated resin surface requires washing to rinse off a plating bath. Such washing after plating usually employs water. Although it is essential to avoid water in an electroplating bath which comprises an imidazolium salt, washing with water can bring water in the form of water vapor into the plating liquid. In order to prevent the adverse effects on plating, therefore, water washing should be avoided. Thus, washing with an organic solvent is effective. In the case that an organic solvent is added to the plating bath as described above, washing with the organic solvent has an additional advantageous effect. The recovery and reuse of the plating liquid rinsed off can be relatively easy and inexpensive. For example, consider a case where a plated body wet with a bath in which xylene is added to a molten salt $AlCl_3$-EMIC is washed with xylene. The liquid rinsed off contains more xylene than the plating bath used. The molten salt $AlCl_3$-EMIC is miscible with xylene in a limited ratio. Thus, the liquid rinsed off separates into xylene in the upper phase and the molten salt $AlCl_3$-EMIC containing approximately 57% by mole xylene in the lower phase. The lower phase can be recovered as molten liquid. Since xylene has a boiling point as low as 144°C, the concentration of xylene in the recovered molten salt can be adjusted by heating to the concentration in the plating liquid. Thus, the recovered molten salt can be reused. After washing with an organic solvent, water washing at a location away from the plating bath is also preferably performed.

An inorganic salt bath can be used as a molten salt provided that the resin is not dissolved (the seventh invention of the present application). A representative inorganic salt bath contains a two-component system salt of $AlCl_3$-XCl (X: alkaline metal) or a multi-component system salt. Although such inorganic salt baths generally have a higher melting temperature than organic salt baths, such as an electroplating bath which comprises an imidazolium salt, the inorganic salt baths have fewer environmental constraints, such as water and oxygen, and can be put to practical use at low cost on the whole. In the case that the resin is a melamine foam resin, the melamine foam resin can be used at a higher temperature than the urethane foam resin, and an inorganic salt bath is used at a temperature in the range of 60°C to 150°C.

An aluminum structural body that includes a resin molded body having a metal layer on a surface thereof is manufactured through these processes. Depending on the application, such as a filter or a catalyst support, the aluminum structural body may be directly used as a resin-metal composite. In order to use a metal structure without resin because of constraints resulting from the usage environment, the resin may be removed (the tenth invention of the present application).

A conductive treatment method of a resin molded body surface may be selected from any method, including known methods. A metal layer, such as a nickel layer, may be formed by electroless plating or a gas phase method. A metal or carbon layer may be formed with a conductive coating. Preferably, a resin molded body to be plated has carbon particles deposited on the surface, which produce an electrically conductive state ready for plating in a molten salt bath (the eleventh invention of the present application). Conductive treatment with carbon can be performed on an aluminum structural body after plating without the contamination of metals other than aluminum. Thus, a structure substantially made of aluminum alone as a metal can be manufactured. There is an additional advantage that the conductive treatment can be performed at low cost.

An aluminum structural body manufactured by the method including conductive treatment described above is an aluminum structural body that includes an aluminum layer having a thickness in the range of 1 to 100 μm as a metal layer, wherein the aluminum layer contains residual carbon particles on one of its surfaces, and the aluminum layer without the resin has an aluminum purity of 98.0% or more and a carbon content of 1.0% or more and 2% or less and contains inevitable impurities as the balance (the fourteenth invention of the present application).

When a porous resin molded body having a three-dimensional network structure is used as the resin molded body, the aluminum structural body thus manufactured includes an aluminum layer having a tubular skeleton structure and forming a porous body having generally contiguous pores (the sixteenth invention of the present application).

An aluminum structural body can also be manufactured in which the skeleton structure has almost triangular sections, and the aluminum layer has a larger thickness at the middle of each side of the triangular sections than at the vertexes of each of the triangular sections (the seventeenth invention of the present application).

When a urethane foam or a melamine foam having a three-dimensional network structure is used as the porous resin molded body, the skeleton of the network structure generally has triangular sections. The term "triangular", as used herein, has no stringent definition and refers to a shape having approximately three vertexes and three curved lines as the sides. Thus, the shape of the aluminum structural body formed by plating also has an almost triangular skeleton. As an example of the conductive treatment method, the deposition of carbon particles will be described below. An increase in the deposition of carbon particles at each side of a triangular section and a decrease in the deposition of carbon particles in the vicinity of its vertexes result in a lower conductivity in plating in the vicinity of the vertexes than at each side of the triangular section. This facilitates the formation of a plated layer at each side of the triangular section relative to the vicinity of the vertexes, thus achieving the shape as described above. Such a shape has a smooth cross-section of skeleton. Thus, a filter including a porous body of the aluminum structural body has advantages, such as smooth filtering.

Advantageous Effects of Invention

The present invention can provide a method for performing aluminum plating on the surface of a resin molded body, in particular the surface of a porous resin molded body having a three-dimensional network structure, and forming a high-purity, large-area aluminum structural body having a substantially uniform and large thickness. The present invention can also provide an aluminum structural body.

Brief Description of Drawings

[Fig. 1] Figure 1 is a flow chart of a process of producing an aluminum structural body according to the present invention.
[Fig. 2] Figure 2 shows schematic cross-sectional views of a process of producing an aluminum structural body according to the present invention.
[Fig. 3] Figure 3 is an enlarged photograph of a surface of the structure of a urethane foam as an example of a porous resin molded body.
[Fig. 4] Figure 4 is an explanatory view of a process of continuous conductive treatment of a resin molded body surface with a conductive coating.
[Fig. 5] Figure 5 is an explanatory view of a continuous aluminum plating process utilizing molten salt plating.
[Fig. 6] Figure 6 is a schematic cross-sectional view of a structure in which porous aluminum is applied to a molten salt battery.
[Fig. 7] Figure 7 is a schematic cross-sectional view of a structure in which porous aluminum is applied to an electrical double layer capacitor.
[Fig. 8] Figure 8 is a schematic view of a cross-section of the skeleton of porous aluminum.
[Fig. 9] Figure 9 is a scanning electron microscope (SEM) photograph of porous aluminum according to an example.
[Fig. 10] Figure 10 is a scanning electron microscope (SEM) photograph of porous aluminum according to another example.
[Fig. 11] Figure 11 is a photograph of the cross-section of skeleton of porous aluminum according to an example in the thickness direction.
[Fig. 12] Figure 12 is a photograph of the cross-section of skeleton of porous aluminum according to another example in the thickness direction.
[Fig. 13] Figure 13 is an enlarged photograph of the surface of porous aluminum according to an example manufactured using a plating bath containing 40% m-xylene.

Description of Embodiments

Embodiments of the present invention will be described below with reference to the drawings if necessary, in which a representative example is a process of producing porous aluminum. Throughout the reference figures, like numerals designate like parts. The dimensions in the figures are not necessarily consistent with their descriptions. The present invention is defined by the appended claims rather than by these embodiments. All modifications that fall within the scope of the claims and the equivalents thereof are intended to be embraced by the claims.

(Process of Producing aluminum structural body)

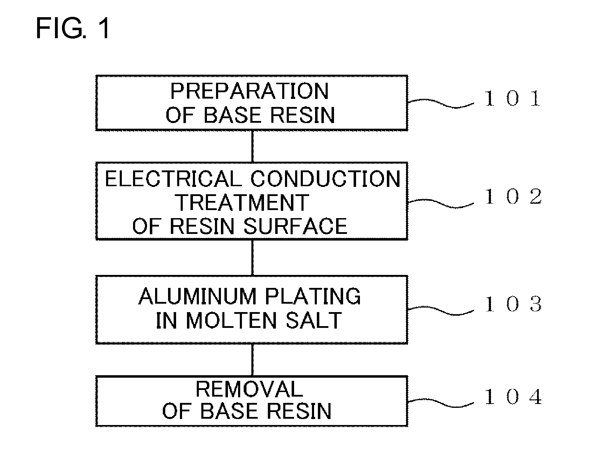

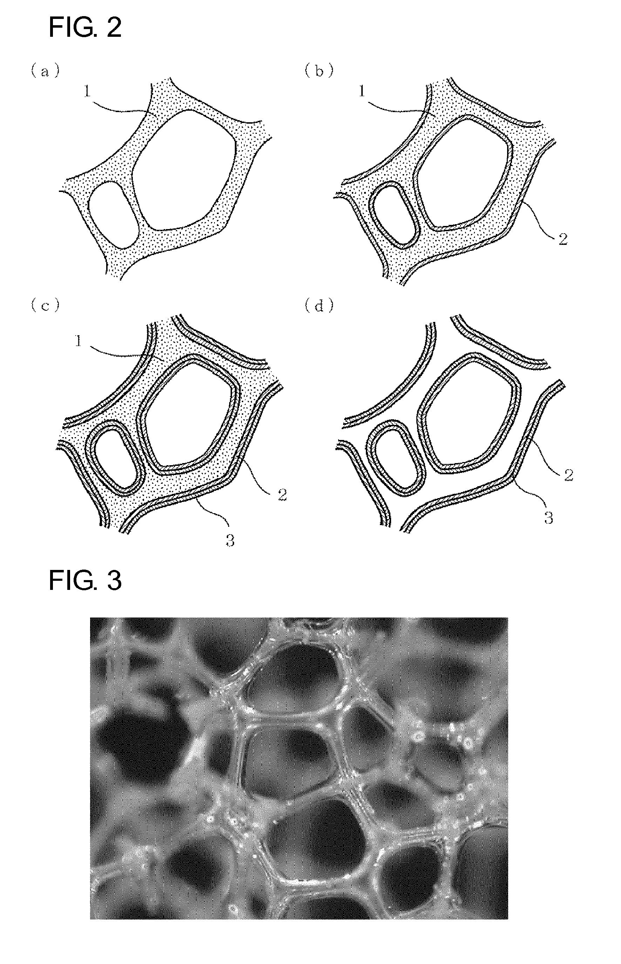

Figure 1 is a flow chart of a process of producing an aluminum structural body according to the present invention. Figure 2 shows schematic views of the formation of an aluminum structural body using a resin molded body as a core material in accordance with the flow chart. The general flow of the producing process will be described below with reference to these figures. First, the preparation of a base resin molded body 101 is performed. Figure 2(a) is an enlarged schematic view of a surface of a resin expansion molded body having continuous pores serving as an example of a base resin molded body. Pores are formed in the skeleton of a resin expansion molded body 1. The conductive treatment of the surface of the resin molded body 102 is then performed. As illustrated in Fig. 2(b), through this process, a thin electrically conductive layer 2 made of an electric conductor is formed on the surface of the resin molded body 1.

Aluminum plating in a molten salt 103 is then performed to form an aluminum plated layer 3 on the surface of the electrically conductive layer of the resin molded body (Fig. 2(c)). Thus, an aluminum structural body is manufactured in which the aluminum plated layer 3 is formed on a surface of a base resin molded body serving as the base material.

Removal of the base resin molded body 104 may be further performed. The resin expansion molded body 1 can be evaporated by decomposition to form an aluminum structural body (porous body) containing only the metal layer (Fig. 2(d)). These processes will be described below process by process.

(Preparation of Porous Resin Molded Body)

A porous resin molded body having a three-dimensional network structure and continuous pores is prepared. The material of the porous resin molded body may be any resin. The material may be exemplified by a resin expansion molded body made of polyurethane, melamine, polypropylene, or polyethylene. The resin expansion molded body may be a resin molded body having any shape provided that the resin molded body has contiguous pores (continuous pores). For example, a nonwoven fabric containing tangled fibrous resin may be used in place of the resin expansion molded body. Preferably, the resin expansion molded body has a porosity in the range of 80% to 98% and a pore size in the range of 50 to 500 $\mu$m. Urethane foams and melamine foams have a high porosity, continuous pores, and an excellent pyrolysis property and are therefore suitable for the resin expansion molded body.

Urethane foams are preferred in terms of the uniformity of pores and availability. Urethane foams are preferred because of their small pore size.

Porous resin molded bodies often contain residue materials, such as a foaming agent and an unreacted monomer in the manufacture of the foam, and are therefore preferably subjected to washing treatment before the subsequent processes. As an example of the porous resin molded body, Fig. 3 illustrates a urethane foam subjected to a washing treatment as a preliminary treatment. The resin molded body has a three-dimensional network skeleton, which includes generally contiguous pores. The skeleton of the urethane foam has an almost triangular section perpendicular to the lateral direction. The porosity is defined by the following equation:

$$\text{Porosity} = (1 - (\text{the weight of porous body [g]}/(\text{the volume of porous body [cm}^3] \times \text{material density}))) \times 100 \ [\%]$$

The pore size is determined by magnifying a surface of the resin molded body in a photomicrograph or the like, counting the number of pores per inch (25.4 mm) as the number of cells, and calculating the average pore size by the following equation: average pore size = 25.4 mm/the number of cells.

(Conductive Treatment of Resin Molded Body Surface: Carbon Application)

A carbon coating is prepared as a conductive coating. A suspension liquid serving as the conductive coating preferably contains carbon particles, a binder, a dispersing agent, and a dispersion medium. Uniform application of conductive particles requires maintaining uniform suspension of the suspension liquid. To this end, the suspension liquid is preferably maintained at a temperature in the range of 20°C to 40°C. This is because a temperature of the suspension liquid below 20°C results in nonuniform suspension, and only a binder is concentrated to form a layer on the surface of the skeleton constituting the network structure of a synthetic resin molded body. In this case, a layer of applied carbon particles tends to peel off, and it is difficult to form metal plating that firmly adheres to the substrate. On the other hand, a temperature of the suspension liquid above 40°C results in a large amount of evaporation of the dispersing agent. With the lapse of application treatment time, the suspension liquid is concentrated, and the application quantity of carbon tends to vary. The particle diameter of carbon particles ranges from 0.01 to 5 $\mu$m, preferably 0.01 to 0.5 $\mu$m. A large particle diameter may result in the clogging of holes of a porous resin molded body or prevent smooth plating. For a small particle diameter, it is difficult to ensure a sufficient conductive property.

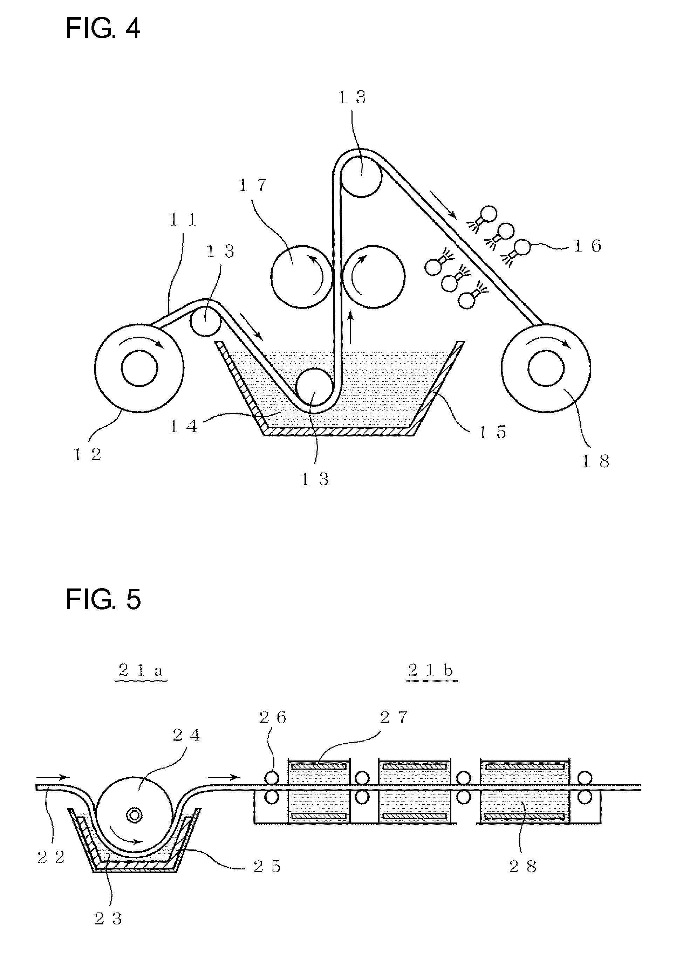

The application of carbon particles to a porous resin molded body can be performed by dipping the resin molded body in the suspension liquid and reducing and drying the resin molded body. Figure 4 is a schematic view of the structure of a treatment apparatus for conductive treatment of a strip of porous synthetic resin molded body, which is to serve as a skeleton, as an example of a practical producing process. As shown in the figure, this apparatus includes a supply bobbin 12 for feeding a strip of resin 11, a bath 15 containing a conductive coating suspension liquid 14, a pair of reducing rolls 17 disposed on top of the bath 15, a plurality of hot air nozzles 16 on opposite sides of the strip of resin 11, and a take-up bobbin 18 for winding the treated strip of resin 11. The apparatus may include a deflector roll 13 for guiding the strip of resin 11. The strip of resin 1 having a three-dimensional network structure is unwound from the supply bobbin 12, is guided by the deflector roll 13, and is dipped in the suspension liquid in the bath 15. The strip of resin 11 dipped in the suspension liquid in the bath 15 changes its direction upward and passes through the reducing rolls 17 disposed on top of the liquid surface of the suspension liquid 14. The distance between the reducing rolls 17 is smaller than the thickness of the strip of resin 11, and therefore the strip of resin 11 is compressed. Thus, an excessive suspension liquid impregnated into the strip of resin 11 is squeezed out into the bath 15.

Subsequently, the strip of resin 11 changes its running direction again. The dispersion medium of the suspension liquid is removed by hot air ejected from the hot air nozzles 16. The strip of resin 11 fully dried is wound around the take-up bobbin 18. The temperature of the hot air ejected from the hot air nozzles 16 preferably ranges from 40°C to 80°C. Such an apparatus can automatically and continuously perform conductive treatment and form a skeleton having a network structure without clogging and having a uniform electrically conductive layer, thus facilitating the smooth operation of the next metal plating process.


(Formation of Aluminum Layer: Molten Salt Plating)


An aluminum plated layer is then formed on the surface of the resin molded body by electrolytic plating in a molten salt. A direct current is applied between a cathode of the resin molded body having a surface subjected to conductive treatment and an anode of a 99.99% aluminum plate in a molten salt. The molten salt may be an organic molten salt that is an eutectic salt of an organic halide and an aluminum halogenide or an inorganic molten salt that is an eutectic salt of an alkaline metal halide and an aluminum halogenide. Use of a bath of an organic molten salt that can melt at a relatively low temperature is preferred because it allows plating without the decomposition of the base material, a resin molded body. The organic halide may be an imidazolium salt or a pyridinium salt. Among others, 1-ethyl-3-methylimidazolium chloride (EMIC) and butylpyridinium chloride (BPC) are preferred.

The contamination of a molten salt by water or oxygen causes a deterioration of the molten salt. Thus, plating is preferably performed in an atmosphere of an inert gas, such as nitrogen or argon, in a sealed environment. When an EMIC bath is used as the organic molten salt bath, the temperature of the plating bath ranges from 10°C to 60°C, preferably 25°C to 45°C.

It is preferable to add an organic solvent to a molten salt bath so as to form a strong aluminum structural body. In particular, xylene is preferably used. The amount of organic solvent added to the plating bath preferably ranges from 25% to 57% by mole. At 25% by mole or less, it is difficult to achieve an effect of decreasing a difference in thickness between the surface layer and the interior. At 57% by mole or more, the plating bath becomes unstable, and the plating liquid and the organic solvent are partially separated.

Figure 5 is a schematic view of an apparatus for continuously performing a metal plating treatment of the strip of resin. A strip of resin 22 having a surface subjected to conductive treatment is transferred from the left to the right in the figure. A first plating bath 21a includes a cylindrical electrode 24, an anode 25 disposed on the inner wall of a container, and a plating bath 23. The strip of resin 22 passes through the plating bath 23 along the cylindrical electrode 24. Thus, a uniform electric current can easily flow through the entire resin molded body, achieving uniform plating. A plating bath 21b for performing thick uniform plating is composed of a plurality of baths so that plating can be performed multiple times. The strip of resin 22 having a surface subjected to conductive treatment is transferred by electrode rollers 26, which function as feed rollers and power feeding cathodes on the outside of container, through a plating bath 28 to perform plating. The plurality of baths include anodes 27 facing both faces of the resin molded body via the plating bath 28, allowing more uniform plating on both faces of the resin molded body.

The next process is a process of washing a plating liquid out. In plating in a molten salt bath to which an organic solvent has been added, the organic solvent is preferably used as the cleaning liquid.

An aluminum structural body (porous aluminum) having a resin molded body as the core of its skeleton is manufactured through these processes. Depending on the application, such as a filter or a catalyst support, the aluminum structural body may be directly used as a resin-metal composite. In order to use a metal structure without resin because of constraints resulting from the usage environment, the resin may be removed. The resin may be removed by decomposition (dissolution) with an organic solvent, a molten salt, or supercritical water, decomposition by heating, or any other method. Decomposition by heating at high temperature is convenient but causes the oxidation of aluminum. Unlike nickel, once oxidized, aluminum is difficult to reduce. Thus, for use in an electrode material for batteries, aluminum cannot be used because its conductive property is lost by oxidation. In order to prevent the oxidation of aluminum, therefore, a method for removing a resin by decomposition by heating in a molten salt as described below is preferably used.

(Removal of Resin: Decomposition by Heating in Molten Salt)

Decomposition by heating in a molten salt is performed in the following manner. A resin molded body having an aluminum plated layer on a surface thereof is dipped in a molten salt. The resin expansion molded body is decomposed by heating while a negative potential is applied to the aluminum layer. The application of the negative potential in the molten salt allows the decomposition of the resin expansion molded body without the oxidation of aluminum. The heating temperature can be appropriately determined in accordance with the type of the resin expansion molded body. The heating temperature must be lower than the melting point (660°C) of aluminum so as not to melt aluminum. A preferred temperature range is 500°C or more and 600°C or less. A negative potential to be applied is on the minus side of the reduction potential of aluminum and on the plus side of the reduction potential of the cation in a molten salt.

The molten salt used in the decomposition of a resin by heating may be an alkaline metal or alkaline earth metal halide salt such that the aluminum electrode potential is less-noble. More specifically, a preferred molten salt contains one or more selected from the group consisting of lithium chloride (LiCl), potassium chloride (KCl), sodium chloride (NaCl), and aluminum chloride ($AlCl_3$). Such a method can provide porous aluminum that has continuous pores, a thin surface oxide layer, and a low oxygen content.

(Lithium-Ion Battery)

A battery electrode material and a battery each including porous aluminum will be described below. When porous aluminum is used in a positive electrode of a lithium-ion battery, the active material may be lithium cobalt oxide ($LiCoO_2$), lithium manganese oxide ($LiMn_2O_4$), or lithium nickel dioxide ($LiNiO_2$). The active material is used in combination with a conduction aid and a binder. In a known positive electrode material for lithium-ion batteries, an active material is applied to the surface of aluminum foil. In order to increase the battery capacity per unit area, the application thickness of the active material is increased. In order to effectively utilize the active material, the active material must be in electrical contact with the aluminum foil. Thus, the active material is mixed with a conduction aid. Porous aluminum according to the present invention has a high porosity and a large surface area per unit area. Thus, even a thin layer of the active material on the surface of the porous aluminum can effectively utilize the active material, increasing the battery capacity and decreasing the amount of conduction aid to be mixed with. Lithium-ion batteries include the positive electrode material described above as the positive electrode, graphite as the negative electrode, and an organic electrolyte as the electrolyte. Such lithium-ion batteries can have an increased capacity even with a small electrode area and accordingly have a higher energy density than conventional lithium-ion batteries.

(Molten Salt Battery)

The porous aluminum can also be used as an electrode material for molten salt batteries. When the porous aluminum is used as a positive electrode material, the active material is a metal compound, such as sodium chromite ($NaCrO_2$) or titanium disulfide ($TiS_2$), into which a cation of a molten salt serving as an electrolyte can be intercalated. The active material is used in combination with a conduction aid and a binder. The conduction aid may be acetylene black. The binder may be polytetrafluoroethylene (PTFE). For the active material of sodium chromate and the conduction aid of acetylene black, the binder is preferably PTFE because PTFE can tightly bind sodium chromate and acetylene black.

The porous aluminum can also be used as a negative electrode material for molten salt batteries. When the porous aluminum is used as a negative electrode material, the active material may be sodium alone, an alloy of sodium and another metal, or carbon. Sodium has a melting point of approximately 98°C and becomes softer with an increase in temperature. Thus, it is preferable to alloy sodium with another metal (such as Si, Sn, or In). In particular, an alloy of sodium and Sn is preferred because of its excellent handleability. Sodium or a sodium alloy can be supported on the surface of the porous aluminum by electroplating, hot dipping, or another method. Alternatively, a metal (such as Si) to be alloyed with sodium may be deposited on the porous aluminum by plating and converted into a sodium alloy by charging the molten salt battery.

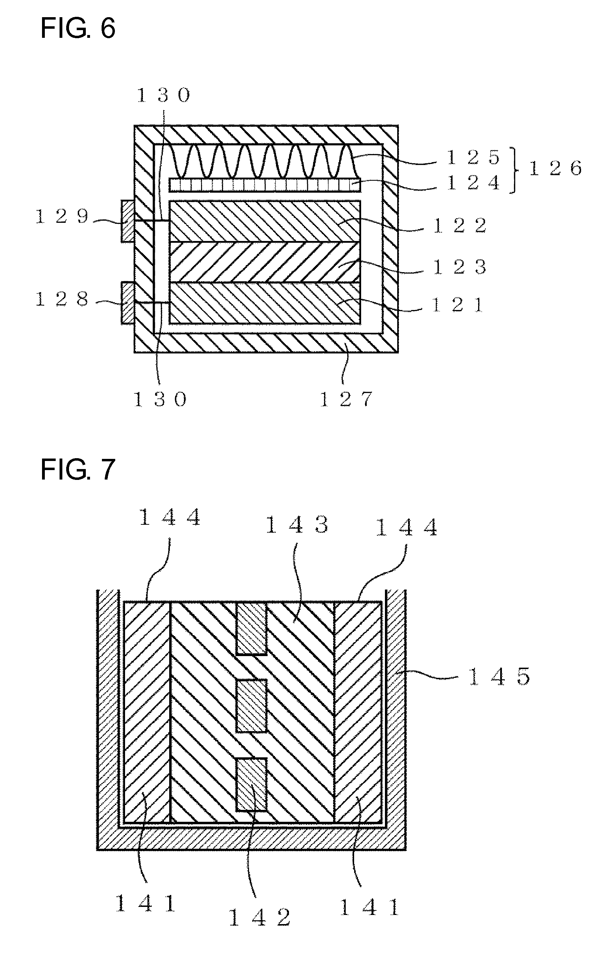

Figure 6 is a schematic cross-sectional view of a molten salt battery manufactured by using the battery electrode material described above. The molten salt battery includes a positive electrode 121, in which a positive electrode active material is supported on the surface of the aluminum skeleton of porous aluminum, a negative electrode 122, in which a negative electrode active material is supported on the surface of the aluminum skeleton of porous aluminum, and a separator 123 impregnated with a molten salt electrolyte, in a case 127. A pressing member 126 is disposed between the top surface of the case 127 and the negative electrode. The pressing member 126 includes a presser plate 124 and a spring 125 for pressing the presser plate. The pressing member can uniformly press the positive electrode 121, the negative electrode 122, and the separator 123 into contact with one another even when the volumes of them have changed. A collector (porous aluminum) of the positive electrode 121 and a collector (porous aluminum) of the negative electrode 122 are connected to a positive electrode terminal 128 and a negative electrode terminal 129, respectively, through a lead wire 130.

The molten salt serving as an electrolyte may be an inorganic salt or an organic salt that can melt at the operating temperature. The cation of the molten salt may be one or more selected from alkaline metals, such as lithium (Li), sodium (Na), potassium (K), rubidium (Rb), and cesium (Cs), and alkaline earth metals, such as beryllium (Be), magnesium (Mg), calcium (Ca), strontium (Sr), and barium (Ba).

In order to decrease the melting point of the molten salt, it is preferable to use a mixture of at least two salts. For example, use of potassium bis(fluorosulfonyl)amide (KFSA) and sodium bis(fluorosulfonyl)amide (NaFSA) in combination can decrease the battery operating temperature to 90°C or less.

The molten salt is used in the form of a separator impregnated with the molten salt. The separator prevents the contact between the positive electrode and the negative electrode and may be a glass nonwoven fabric or a porous resin molded body. A laminate of the positive electrode, the negative electrode, and the separator impregnated with the molten salt housed in a case is used as a battery.

(Electrical Double Layer Capacitor)

The porous aluminum can also be used as an electrode material for electrical double layer capacitors. When the porous aluminum is used as an electrode material for an electrical double layer capacitor, the electrode active material may be activated carbon. Activated carbon is used in combination with a conduction aid and a binder. The conduction aid may be graphite or carbon nano-tube. The binder may be polytetrafluoroethylene (PTFE) or styrene-butadiene rubber.

Figure 7 is a schematic cross-sectional view of an electrical double layer capacitor manufactured by using the electrode material for an electrical double layer capacitor. A polarizable electrode 141 is disposed in an organic electrolyte 143 partitioned with a separator 142. The polarizable electrode 141 is made of an electrode material, which is an electrode active material supported on the porous aluminum. The electrode material 141 is connected to a lead wire 144. All the components are housed in a case 145. Use of the porous aluminum as a collector can increase the surface area of the collector. Thus, even a thin layer of activated carbon as the active material on the surface of the porous aluminum can result in an electrical double layer capacitor with a high power and a high capacity.

EXAMPLE 1

(Formation of Electrically Conductive layer)

An example of the manufacture of porous aluminum will be specifically described below. A urethane foam having a thickness of 1 mm, a porosity of 95%, and approximately 50 pores (cells) per inch was prepared as a resin expansion molded body and was cut into a 100 mm x 30 mm square. The urethane foam was dipped in a carbon suspension liquid and was dried to form an electrically conductive layer, the entire surface of which carbon particles are deposited on. The components of the suspension liquid include 25% graphite + carbon black, a resin binder, a penetrant, and an antifoaming agent. The carbon black had a particle diameter of 0.5 $\mu$m.

(Molten Salt Plating)

Plating Example 1:

The urethane foam having an electrically conductive layer on the surface thereof was mounted as a piece of work in a jig having an electricity supply function. The urethane foam was placed in an argon atmosphere at low humidity (a dew point of -30°C or less) in a glove box and was dipped in a molten salt aluminum plating bath (33% by mole EMIC-67% by mole $AlCl_3$) at a temperature of 40°C. The jig holding the piece of work was connected to the cathode of a rectifier, and an aluminum plate (purity 99.99%) of the counter electrode was connected to the anode. A direct current was applied at a current density of 3.6 A/dm$^2$ for 90 minutes to perform plating. Agitation was performed with a stirrer having a Teflon (registered trademark) rotor. The current density was calculated on the basis of the apparent area of the urethane foam. As a result, 150 g/m$^2$ of an aluminum plated layer was formed.

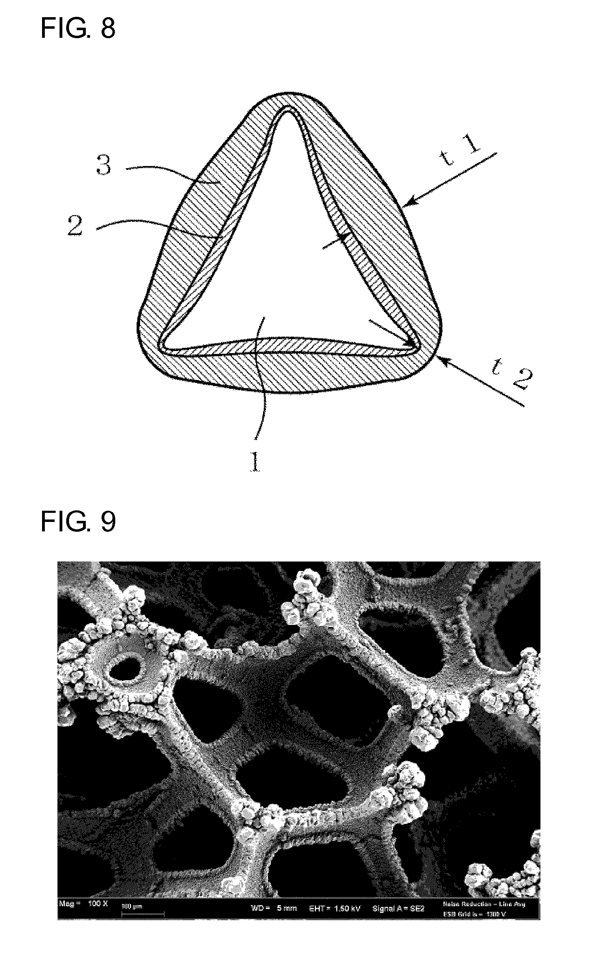

A sample of the skeleton of the resulting porous aluminum was cut at a cross-section perpendicular to the lateral direction of the skeleton and was observed. The cross-section was almost triangular, which reflected the structure of the core material, urethane foam. Figure 8 is a schematic view of the cross-section. A carbon layer is formed on the surface of the resin expansion molded body 1 as an electrically conductive layer and is overlaid with the aluminum plated layer 3. The thickness of the aluminum plated layer was measured. The thickness t1 of the aluminum plated layer at the middle of each side of the triangular section was approximately 15 $\mu$m on average. The thickness t2 of the aluminum plated layer at the vertexes of the triangular section was smaller than the thickness t1. This is probably because, in conductive treatment performed by carbon application, dipping in a carbon suspension liquid, squeezing of excessive liquid, and drying result in an increase in the number of carbon particles deposited on the sides of the triangular section and a decrease in the number of carbon particles deposited on the vertexes. Much electricity can pass through a portion rich in carbon in plating, thus forming thick plating. Thus, such a shape can be formed when the skeleton of the core material, the porous resin molded body, has almost triangular sections, and when conductive treatment is performed using a suspension liquid of conductive particles, in particular carbon particles having lower electrical conductivity than metals.

Plating Example 2:

Plating was performed in the same manner as in Plating Example 1 except that the bath was 17% by mole EMIC-34% by mole $AlCl_3$-49% by mole xylene. After plating for a predetermined time, a jig holding a piece of work was taken out and left to stand on the plating bath for two minutes to let the liquid drain off. A container having a stop-cock on the bottom thereof was then filled with 1 L of xylene. The piece of work was dipped in the xylene for one minute to remove the plating liquid from the piece of work. The piece of work was taken out of the jig and was further washed with xylene in a washing bottle. The xylene was recovered and added to the xylene used in the dip treatment. The total amount was 1.5 L. The piece of work washed with xylene was taken out of the glove box and was dried with warm air. Thus, 150 $g/m^2$ of an aluminum plating film was formed.
The xylene used in washing became separated into two layers. A stop-cock on the bottom was opened to recover the lower layer alone. The analysis showed that the lower layer was 14% by mole EMIC-28% by mole $AlCl_3$-58% by mole xylene. Thus, only the xylene was evaporated with a distillation apparatus to produce 17% by mole EMIC-34% by mole $AlCl_3$-49% by mole xylene, which was reused as the plating liquid.

(Decomposition of Resin Expansion Molded Body)

Each of the resin molded bodies having the aluminum layer was dipped in a LiCl-KCl eutectic molten salt at a temperature of 500°C. A negative potential of -1 V was applied to the resin molded body for 30 minutes. Air bubbles resulting from the decomposition reaction of a polyurethane were generated in the molten salt. The product was cooled to room temperature in the atmosphere and was washed with water to remove the molten salt, thus forming porous aluminum from which the resin had been removed. The porous aluminum thus formed had continuous pores and, like the urethane foam used as the core material, had high porosity.
The porous aluminum was dissolved in nitromuriatic acid and was subjected to an inductively-coupled plasma emission spectrometer. The aluminum purity was 98.5% by mass. The carbon content was 1.4% by mass as measured by an infrared absorption method after combustion in a high-frequency induction furnace in accordance with Japan Industrial Standard G1211. The energy dispersive X-ray spectroscopy (EDX) of the surface at an accelerating voltage of 15 kV showed a negligible oxygen peak, indicating that the oxygen content of the porous aluminum was lower than the detection limit of EDX (3.1 % by mass).

EXAMPLE 2

(Formation of Electrically Conductive Layer)

As means of forming an electrically conductive layer, instead of Example 1, nickel electroless plating was performed.

- Hydrophilic treatment; alkaline + cationic surface-active agent + nonionic surface active agent, 50°C, 2 minutes
- Water washing
- Acid treatment: 8% hydrochloric acid, room temperature, 30 seconds
- Catalyst loading: hydrochloric acid + Catalyst C (Okuno Chemical Industries Co., Ltd.), 20°C, 3 minutes
- Water washing
- Activation: sulfuric acid + Accelerator X (Okuno Chemical Industries Co., Ltd.), 45°C, 2 minutes
- Water washing
- Electroless plating: the pH of a plating liquid (nickel sulfate: 22 g/L, sodium hypophosphite: 20 g/L, sodium citrate: 40 g/L, ammonium borate: 10 g/L, stabilizing agent: 1 ppm) was adjusted to 9 with aqueous ammonia, 35°C, 3 minutes
- Water washing
- Drying

The mass per unit area of the electroless Ni plating thus performed was 10 $g/m^2$, and the composition was Ni-3% by weight P.

(Molten Salt Plating)

As Plating Example 3, aluminum plating was performed under the conditions described in Plating Example 1. 120 g/m² of an aluminum plating film was almost uniformly formed. As Plating Example 4, aluminum plating was performed under the conditions described in Plating Example 2. 120 g/m² of a porous aluminum was also formed.

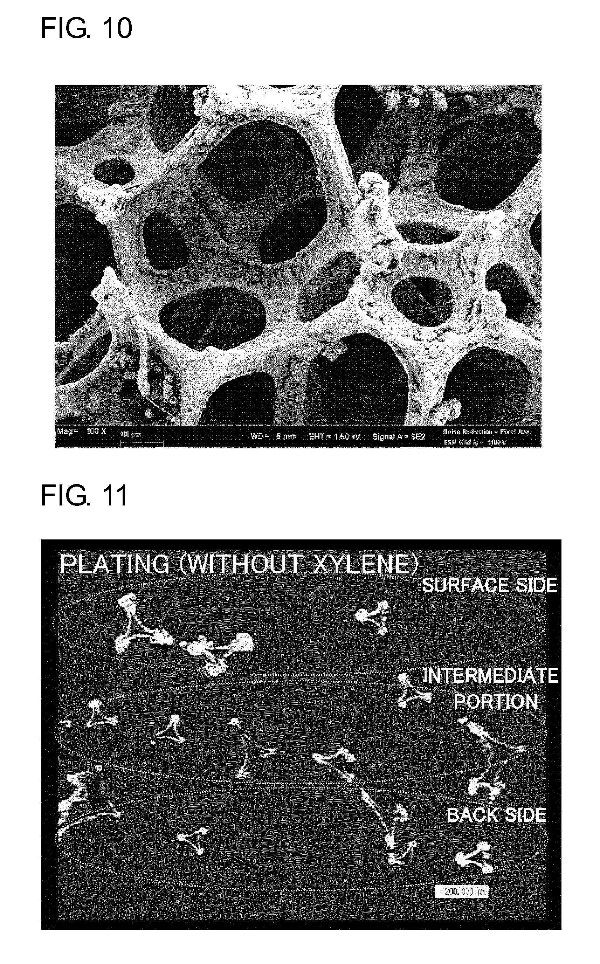

Figure 9 (Plating Example 3) and Fig. 10 (Plating Example 4) are scanning electron microscope (SEM) photographs of the porous aluminum thus formed. Plating Example 3, which included no xylene, had relatively large surface irregularities. Particularly in the vicinity of the ridgeline of the skeleton, plating seems to grow in a granular form. In contrast, Plating Example 4, which includes xylene, had a very smooth surface.

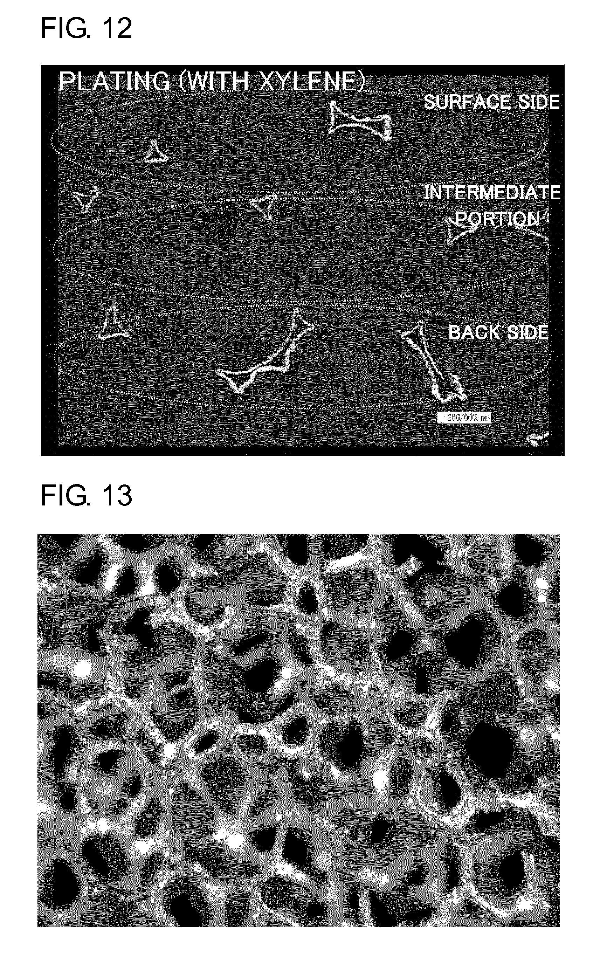

Figure 11 shows a cross-section of the porous aluminum shown in Fig. 9 parallel to the thickness direction. Figure 12 shows a cross-section of the porous aluminum shown in Fig. 10 parallel to the thickness direction. In Figs. 11 and 12, the vertical direction is the thickness direction of the porous body. Among the regions surrounded by the dotted lines, the upper region corresponds to the surface side, the central region corresponds to the intermediate portion, and the lower region corresponds to the back side. In actual plating, there is no distinction between the front side and the back side. Thus, one surface is temporarily referred to as the surface side, and the other surface is referred to as the back side. The regions surrounded by the dotted lines show rough distinctions for convenience of explanation and do not have particular boundaries. Since the cross-sections of the urethane skeleton are almost triangular, the aluminum layers formed on the surfaces seem to have almost triangular sections. The xylene-added bath in Fig. 12 has generally more uniform aluminum layers than in Fig. 11. More specifically, each side of one almost triangular section is much more uniform in Fig. 12 than in Fig. 11, although the vertexes have a slightly greater thickness than the sides in Fig. 12. The surface side, the intermediate portion, and the back side of the entire porous body in the thickness direction have little difference in the plating thickness. This is consistent with the very smooth surface of the skeleton in the surface observation. In Fig. 11, plating has a very large thickness in the vicinity of the vertexes of each of the almost triangular sections. This seems to be a granular appearance in the surface observation. The intermediate portion has a smaller plating thickness than the surface side or the back side.

EXAMPLE 3: Comparison of Xylene Isomers

In the formation of porous aluminum in the same manner as in Example 1, the type of xylene was changed, and the plated surface was observed. Three plating baths having different EMIC:AlCl₃:xylene ratios were prepared for each xylene isomer, and the surface after plating was observed. Table shows the results. The mixed xylene was the same as that used in Examples 1 and 2. The mixed xylene had a purity of 80% or more and was composed of o-18%, m-42%, p-25%, and impurities as the balance.

Table 1

| Mixing ratio | EMIC | AlCl$_3$ | Xylene | Mixture | o-isomer | m-isomer | p-isomer |
|---|---|---|---|---|---|---|---|
| 1:2:1 | 25% | 50% | 25% | - | ○ | Δ | ○ |
| 1:2:2 | 20% | 40% | 40% | - | ○ | ◎ | ○ |
| 1:2:3 | 17% | 33% | 50% | ○ | ○ | ◎ | ○ |
| ◎: Excellent, ○: Good, Δ: Fair, -: Not available | | | | | | | |

Table shows the results of the visual inspection of the surface after plating. "Good" represents the observation of a smooth and uniform plated surface. In particular, a ratio in the range of 1:2:2 to 1:2:3 (approximately 35% to 55%) in the m-isomer resulted in a markedly high gloss, that is, dense and smooth surface. For example, Fig. 13 is a photograph of plated porous aluminum for 40% m-xylene. In contrast, 25% m-isomer resulted in uneven plating.

(Evaluation of Porous Aluminum in Battery)

The practical evaluation of porous aluminum used as a battery electrode will be described below in comparison with a conventional structure having an aluminum foil electrode.

A positive electrode active material $LiCoO_2$ having an average particle diameter of 7 μm, a conduction aid carbon black, and a binder resin polyvinylidene fluoride were mixed at 10:1:1 (mass ratio). A solvent N-methyl-2-pyrrolidone was added to the mixture to prepare a paste. Porous aluminum having a three-dimensional network structure and a porosity of approximately 95% was filled with the paste, was dried under vacuum at 150°C, and was role-pressed to a thickness corresponding to 70% of the initial thickness to form a battery electrode material (positive electrode). The battery electrode material was punched in a diameter of 10 mm and was fixed to a coin battery container made of stainless steel SUS304 by spot welding. The positive electrode filling capacity was 2.4 mAh.

For comparison purposes, the mixture paste of $LiCoO_2$, carbon black, and polyvinylidene fluoride was applied to aluminum foil having a thickness of 20 $\mu$m and was dried and role-pressed in the same manner as described above to prepare a battery electrode material (positive electrode). The battery electrode material was punched in a diameter of 10 mm and was fixed to a coin battery container made of stainless steel SUS304 by spot welding. The positive electrode filling capacity was 0.24 mAh.

A polypropylene porous film having a thickness of 25 $\mu$m was used as a separator. A solution of 1 M $LiPF_6$ in ethylene carbonate (EC)/diethyl carbonate (DEC) (volume ratio 1:1) was dropped at 0.1 ml/cm2 on the separator, which was then subjected to vacuum impregnation. A lithium aluminum foil having a thickness of 20 $\mu$m and a diameter of 11 mm was fixed to the top lid of a coin battery container as a negative electrode. The battery electrode material (positive electrode), the separator, and the negative electrode were laminated in this order and were caulked with a Viton (registered trademark) o-ring placed between the top lid and the bottom lid to manufacture a battery. In deep discharge, the upper limit voltage was 4.2 V, and the lower limit voltage was 3.0 V. Charging to the positive electrode filling capacity was followed by discharging at each discharge rate. The lithium secondary battery containing the porous aluminum as the positive electrode material had a capacity approximately five times the capacity of a conventional battery containing aluminum foil as the electrode material at 0.2 C.

The above description includes the following characteristics.

(Additional Entry 1)

A method for producing an aluminum structural body, including plating a resin molded body, at least the surface of which has been subjected to conductive treatment, with aluminum in a first molten salt bath and, while the resin molded body having the aluminum plated layer is dipped in a second molten salt and while a negative potential is applied to the aluminum plated layer, heating the resin molded body to a temperature of the melting point of aluminum or less to decompose the resin molded body.

(Additional Entry 2)

The method for producing porous aluminum according to Additional Entry 1, wherein the resin molded body is a resin expansion molded body having a three-dimensional network structure and contiguous pores.

(Additional Entry 3)

An electrode material in which an active material is supported on an aluminum surface of porous aluminum according to the present invention.

(Additional Entry 4)

A battery containing the electrode material according to Additional Entry 3 in one or both of the positive electrode and the negative electrode.

(Additional Entry 5)

An electrical double layer capacitor containing the electrode material according to Additional Entry 3 as an electrode.

(Additional Entry 6)

A filtration filter including porous aluminum according to the present invention.

(Additional Entry 7)

A catalyst support in which a catalyst is supported on the surface of porous aluminum according to the present invention.

Industrial Applicability

The present invention can provide a structure in which a surface of a resin molded body is plated with aluminum and an aluminum structural body manufactured by removing the resin molded body from the structure. Thus, the present invention can be widely applied as porous aluminum to cases where the characteristics of aluminum can be exploited, for example, in electric materials, such as battery electrodes, various filters for filtration, and catalyst supports.

Reference Signs List

1 Resin expansion molded body
2 Electrically conductive layer
3 Aluminum plated layer
11 Strip of resin
12 Supply bobbin
13 Deflector roll
14 Suspension liquid
15 Bath
16 Hot air nozzle
17 Reducing roll
18 Take-up bobbin
21a, 21b Plating bath
22 Strip of resin
23, 28 Plating bath
24 Cylindrical electrode
25, 27 Positive electrode
26 Electrode roller
121 Positive electrode
122 Negative electrode
123 Separator
124 Presser plate
125 Spring
126 Pressing member
127 Case
128 Positive electrode terminal
129 Negative electrode terminal
130 Lead wire
141 Polarizable electrode
142 Separator
143 Organic electrolyte
144 Lead wire
145 Case

**Claims**

1. A method for producing an aluminum structural body, comprising: a process of plating a resin molded body with aluminum in a molten salt bath, at least the surface of the resin molded body having been subjected to conductive treatment.

2. The method for producing an aluminum structural body according to Claim 1, wherein the resin molded body is a porous resin article having a three-dimensional network structure.

3. The method for producing an aluminum structural body according to Claim 1 or 2, wherein the molten salt bath is an electroplating bath which comprises an imidazolium salt.

4. The method for producing an aluminum structural body according to any one of Claims 1 to 3, wherein the molten salt bath is an electroplating bath which comprises an imidazolium salt and to which an organic solvent is added.

5. The method for producing an aluminum structural body according to Claim 4, wherein the addition of the organic solvent accounts for 25% to 57% by mole of the entire plating bath.

6. The method for producing an aluminum structural body according to Claim 4 or 5, wherein the organic solvent is xylene.

7. The method for producing an aluminum structural body according to Claim 6, wherein the xylene is m-xylene, and the amount of added xylene accounts for 35% to 57% by mole of the entire plating bath.

8. The method for producing an aluminum structural body according to Claim 4, further comprising a washing process using the organic solvent as a cleaning liquid after the plating process.

9. The method for producing an aluminum structural body according to Claim 1 or 2, wherein the molten salt bath is an inorganic salt bath.

10. The method for producing an aluminum structural body according to any one of Claims 1 to 9, further comprising a process of removing the resin molded body after the plating process.

11. The method for producing an aluminum structural body according to any one of Claims 1 to 10, wherein the resin molded body subjected to the conductive treatment has carbon particles deposited on a surface thereof, which produce an electrically conductive state ready for plating in a molten salt bath.

12. The method for producing an aluminum structural body according to any one of Claims 1 to 11, wherein the resin molded body is made of urethane or melamine.

13. An aluminum structural body manufactured by the method according to any one of Claims 1 to 12.

14. An aluminum structural body, comprising an aluminum layer having a thickness in the range of 1 to 100 $\mu$m as a metal layer, wherein the metal layer has an aluminum purity of 98.0% or more and a carbon content of 1.0% or more and 2% or less and contains inevitable impurities as the balance.

15. The aluminum structural body according to Claim 14, further comprising a resin molded body, on which the metal layer is disposed.

16. The aluminum structural body according to Claim 13 or 14, wherein the aluminum layer has a tubular skeleton structure and forms a porous body having generally contiguous pores.

17. The aluminum structural body according to any one of Claims 13 to 16, wherein the skeleton structure has almost triangular sections, and the aluminum layer has a larger thickness at the middle of each side of the triangular sections than at the vertexes of each of the triangular sections.

FIG. 1

FIG. 2

(a)

(b)

(c)

(d)

FIG. 3

FIG. 4

FIG. 5

FIG. 6

FIG. 7

## FIG. 8

## FIG. 9

## FIG. 10

## FIG. 11

FIG. 12

FIG. 13

## INTERNATIONAL SEARCH REPORT

| | International application No. |
| | PCT/JP2011/058781 |

### A. CLASSIFICATION OF SUBJECT MATTER

*C25D5/56*(2006.01)i, *C22C21/00*(2006.01)i, *C25D1/08*(2006.01)i, *C25D3/66* (2006.01)i, *C25D7/00*(2006.01)i, *H01M4/66*(2006.01)i, *H01M4/80*(2006.01)i

According to International Patent Classification (IPC) or to both national classification and IPC

### B. FIELDS SEARCHED

Minimum documentation searched (classification system followed by classification symbols)
C25D5/56, C22C21/00, C25D1/08, C25D3/66, C25D7/00, H01M4/66, H01M4/80

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 5-271986 A (Mitsubishi Petrochemical Co., Ltd.),<br>19 October 1993 (19.10.1993),<br>entire text<br>(Family: none) | 1,3<br>1-17 |
| X<br>Y | JP 6-279609 A (Mitsubishi Petrochemical Co., Ltd.),<br>04 October 1994 (04.10.1994),<br>entire text<br>(Family: none) | 1,3<br>1-17 |
| Y | JP 63-89697 A (Sumitomo Electric Industries, Ltd.),<br>20 April 1988 (20.04.1988),<br>entire text<br>(Family: none) | 1-17 |

| [X] Further documents are listed in the continuation of Box C. | [ ] See patent family annex. |

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>04 July, 2011 (04.07.11) | Date of mailing of the international search report<br>12 July, 2011 (12.07.11) |
|---|---|
| Name and mailing address of the ISA/<br>Japanese Patent Office | Authorized officer |
| Facsimile No. | Telephone No. |

Form PCT/ISA/210 (second sheet) (July 2009)

22

**INTERNATIONAL SEARCH REPORT**

International application No.

PCT/JP2011/058781

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2-73988 A (Sumitomo Electric Industries, Ltd.), 13 March 1990 (13.03.1990), entire text (Family: none) | 1-17 |
| Y | JP 6-122994 A (Nisshinbo Industries, Inc.), 06 May 1994 (06.05.1994), entire text (Family: none) | 1-17 |
| Y | JP 1-272790 A (Nisshin Steel Co., Ltd.), 31 October 1989 (31.10.1989), entire text & EP 339536 A1       & US 4904355 A | 1-17 |
| Y | JP 2-305988 A (Mitsubishi Petrochemical Co., Ltd.), 19 December 1990 (19.12.1990), entire text & EP 398358 A2       & EP 398358 A3 & US 5041194 A       & DE 69007163 D & DE 69007163 T | 1-17 |
| Y | JP 6-101088 A (Mitsubishi Petrochemical Co., Ltd.), 12 April 1994 (12.04.1994), entire text (Family: none) | 1-17 |

Form PCT/ISA/210 (continuation of second sheet) (July 2009)

**EP 2 562 295 A1**

**REFERENCES CITED IN THE DESCRIPTION**

**Patent documents cited in the description**

- JP 3413662 B
- JP 8170126 A
- JP 3202072 B